# EUROPÄISCHE PATENTSCHRIFT

(11) **EP 1 077 148 B1**
(45) Veröffentlichungstag und Bekanntmachung des Hinweises auf die Patenterteilung: **23.09.2009**
(21) Anmeldenummer: 00117148.7
(22) Anmeldetag: 10.08.2000
(51) Int. Cl.: B60J 7/185, B60J 7/053

(54) **Fahrzeugdach mit einem verschiebbaren starren Element**
Vehicle roof provided with a slidable rigid element
Toit de véhicule équipé avec un élément coulissant rigide

(30) Priorität: 14.08.1999 DE 19938605
(43) Veröffentlichungstag der Anmeldung: 21.02.2001
(73) Patentinhaber: Webasto AG, 82131 Stockdorf (DE)
(72) Erfinder: Reinsch, Burkhard, 87600 Kaufbeuren (DE)
(74) Vertreter: Konnerth, Dieter Hans

(56) Entgegenhaltungen:
- EP-A- 0 218 890
- US-A- 5 593 204

## Beschreibung

Ein Aspekt der vorliegenden Erfindung betrifft ein Fahrzeugdach gemäß dem Oberbegriff von Anspruch 1. Ein anderer Aspekt der vorliegenden Erfindung betrifft ein Fahrzeugdach gemäß dem Oberbegriff von Anspruch 10.

Aus der AU 264472 A, worauf sich der Oberbegriff von Anspruch 1 bzw. 10 bezieht, ist ein Fahrzeugdach bekannt, bei welchem ein Schiebedeckel mittels einer Lagerhülse, in welche ein entsprechender Bolzen eines Scharnierteils eingreift, das drehbar auf einer mit einem Gleitschuh fest verbundenen Welle gelagert und in Axialrichtung gegen die Vorspannkraft einer Schraubenfeder verschiebbar ist, mittels des Gleitschuhs, der in eine dachfeste Führungsschiene eingreift, in Dachlängsrichtung verschiebbar gelagert ist. Alle Bolzen, Wellen und Hülsen verlaufen in Fahrzeugquerrichtung. An jeder der beiden Seiten des Schiebedekkels ist eine solche Lagervorrichtung vorgesehen. Die beiden Schraubenfedern dienen im Zusammenwirken mit der axialen, d.h. seitlichen, Verschiebbarkeit des Scharnierteils dazu, Abstandstoleranzen der beiden seitlichen Führungsschienen auszugleichen. Mittels der Scharnierwirkung des Scharnierteils ist der Schiebedeckel bezüglich der beiden Gleitschuhe, zusätzlich zu der erwähnten Verschiebbarkeit in Fahrzeugquerrichtung um die Fahrzeugquerachse verdrehbar, d.h. es ist auch eine Verschiebung des Deckels bezüglich der Gleitschuhe in Fahrzeuglängsrichtung und Fahrzeughochrichtung möglich.

Ferner ist es allgemein für sich bekannt, Toleranzen bei entlang einer Dachöffnung verschiebbaren Elementen durch Spiel der Gleitschuhe in den dachfesten Führungsschienen und elastische Bauteile auszugleichen.

Es ist eine erste Aufgabe der vorliegenden Erfindung, ein Fahrzeugdach der oben genannten Art mit einem entlang einer Dachöffnung verschiebbaren im wesentlichen starren Element zu schaffen, dessen Lagervorrichtung so ausgebildet ist, daß sie auch große Toleranzen zwischen dem starren Element, der dachfesten Führung und der Verstellmechanik ohne die Notwendigkeit eines Spiels zwischen der Verstellmechanik und der dachfesten Führung bei guter mechanischer Stabilität ausgleichen kann.

Es ist ferner Aufgabe der vorliegenden Erfindung, ein Fahrzeugdach mit einem entlang einer Dachöffnung verschiebbaren im Wesentlichen starren Element zu schaffen, dessen Lagervorrichtung so ausgebildet ist, daß sie Toleranzen in Fahrzeugquerrichtung aufnehmen kann und dennoch eine Verkippung des starren Elements um die Fahrzeugquerrichtung verhindert.

Die erste Aufgabe wird erfindungsgemäß gelöst durch ein Fahrzeugdach, wie es in Anspruch 1 definiert ist. Bei dieser erfindungsgemäßen Lösung ist vorteilhaft, daß bei guter mechanischer Stabilität auch Toleranzen ausgeglichen werden können, welche das Spiel der Verstellmechanik bezüglich der dachfesten Führung übersteigen.

In weiterer vorteilhafter Ausgestaltung dieser Lösung weist jede Lagervorrichtung eine sich im Wesentlichen in Fahrzeugquerrichtung erstreckende erste Lagerhülse und einen darin eingreifenden ersten Lagerbolzen auf, wobei der erste Bolzen in Fahrzeuglängsrichtung und in Fahrzeughochrichtung ballig ausgebildet ist und die erste Hülse so bemessen ist, daß der erste Bolzen in Fahrzeuglängsrichtung und in Fahrzeughochrichtung kein Spiel hat, wobei vorzugsweise die erste Hülse so bemessen ist, daß der erste Bolzen in Fahrzeugquerrichtung Spiel hat. Dies stellt eine besonders einfache und kostengünstige Ausgestaltung der Erfindung dar.

Die weitere Aufgabe wird erfindungsgemäß gelöst durch ein Fahrzeugdach, wie es in Anspruch 10 definiert ist. Bei dieser erfindungsgemäßen Lösung ist vorteilhaft, daß große Toleranzen in Fahrzeugquerrichtung ausgeglichen werden können und zugleich eine Verkippung des starren Elements um die Fahrzeugquerachse verhindert wird.

Vorzugsweise ist jede Lagervorrichtung so ausgebildet, daß das starre Element zwischen den Verstellmechanikteilen in Fahrzeugquerrichtung über ein Federelement zentriert ist. Dabei ist vorzugsweise eine Feder vorgesehen, welche den ersten Bolzen in axialer Richtung der ersten Hülse so vorspannt, daß das starre Element bezüglich des Verstellmechanikteils nach innen zur Dachmitte gedrückt wird.

Vorzugsweise handelt es sich bei dem starren Element um das Spannelement eines Faltdaches, insbesondere die Dachspitze, während es sich bei den Verstellmechanikteilen um in dachfesten Schienen in Fahrzeuglängsrichtung geführte Gleitelemente handelt.

Im folgenden sind zwei Ausführungsformen der Erfindung anhand der Zeichnungen näher erläutert. Es zeigen:
- Fig. 1A: in schematischer Weise die Aufsicht auf ein Fahrzeugdach in einer ersten Ausführungsform, wobei ein Teil eines verschiebbaren Dachelements gezeigt ist, welches über eine Lagervorrichtung mit einem Verstellmechanikteil verbunden ist,
- Fig. 1B: eine Seitenansicht des Gegenstands von Fig. 1A, und
- Fig. 1C: einen Schnitt entlang der Linie I-I von Fig. 1A;
- Fig. 2: eine perspektivische Ansicht einer zweiten Ausführungsform eines Fahrzeugdaches;
- Fig. 3: eine perspektivische Ansicht des Verstellmechanikteils und des verstellmechanikteilseitigen Teils der Lagervorrichtung von Fig. 2;
- Fig. 4: die Schnittansicht entlang der Linie IV-IV von Fig. 2; und
- Fig. 5: die Schnittansicht entlang der Linie V-V von Fig. 2.

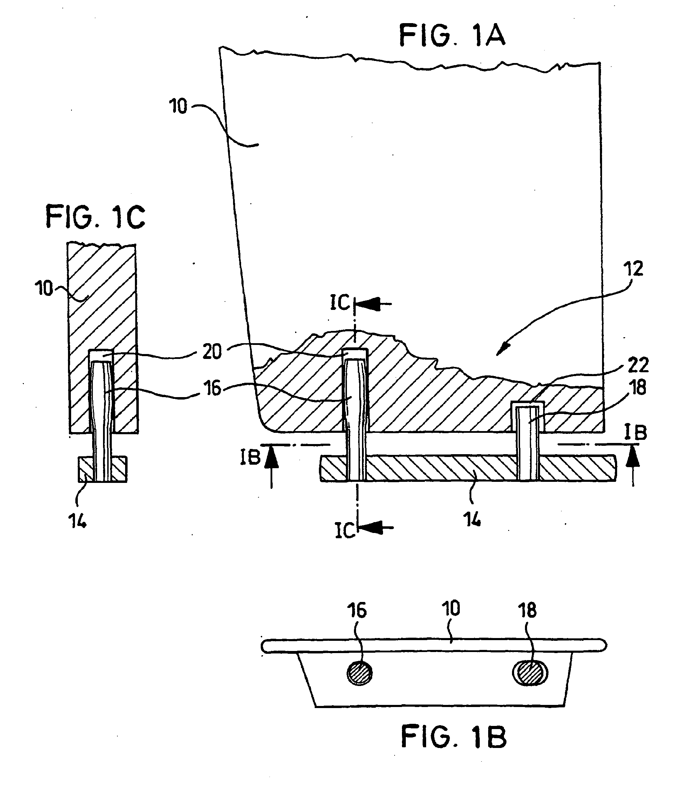

In Fig. 1 A bis 1C ist eine erste Ausführungsform der Erfindung schematisch dargestellt. Mit dem Bezugszeichen 10 ist dabei eine im Wesentlichen starre Dachspitze für ein Faltdach bezeichnet, welche sich in Querrichtung einer Öffnung in einer festen Dachhaut erstreckt und mittels einer insgesamt mit dem Bezugszeichen 12 bezeichnete Lagervorrichtung mit einem Verstellmechanikteil (Gleitelement 14) verbunden ist, welches dazu dient, die Dachspitze 10 in Dachlängsrichtung zu verschieben. Das Verstellmechanikteil sei deshalb im folgenden als Gleitelement 14 bezeichnet. Das Gleitelement 14 weist einen vorderen Bolzen 16 und einen hinteren Bolzen 18 auf, die jeweils in eine Lagerhülse 20 bzw. 22 eingreifen. Der vordere Bolzen 16 ist sowohl in Fahrzeuglängsrichtung als auch in Fahrzeughochrichtung ballig ausgebildet, d.h. seine Umfangsfläche weicht insofern von einer perfekten zylindrischen Form ab, als sie entlang des gesamten Umfangs konvex gekrümmt ist. Dabei ist der Durchmesser des Bolzens in etwa in der Mitte des Eingriffsbereichs am größten und nimmt in beiden axialen Richtung von diesem Maximum ausgehend ab. Insgesamt ist der Bolzen 16 jedoch rotationssymmetrisch ausgebildet. Die vordere Hülse 20 ist so ausgebildet, daß der Bolzen 16 in axialer Richtung, d.h. in Fahrzeugquerrichtung, Spiel hat und verschiebbar ist, während der Bolzen 16 in radialer Richtung, d.h. in Fahrzeuglängsrichtung und Fahrzeughochrichtung, kein Spiel hat. Die vordere Hülse 20 ist dabei zylindrisch ausgebildet, wobei der Durchmesser und die Länge so bemessen sind, daß die vorstehend erwähnte Funktion realisiert wird. Aufgrund der Balligkeit des Bolzens 16 ist dabei eine Drehung des Bolzens 16, und damit des Gleitelements 14, bezüglich der Dachspitze 10 um die Fahrzeughochachse in einem gewissen Winkelbereich möglich, der von der Balligkeit des Bolzens 16 bestimmt wird. Ferner ist der Bolzen 16 aufgrund seiner rotationssymmetrischen Ausbildung innerhalb der Hülse 20 um deren Längsachse drehbar, so daß das Gleitelement 14 bezüglich der Dachspitze 10 um die Fahrzeugquerachse schwenkbar ist.

Um diese unerwünschte Schwenkbarkeit um die Fahrzeugquerachse zu unterbinden und gleichzeitig die mechanische Stabilität des Lagers 12 zu erhöhen, ist der hintere Bolzen 18 vorgesehen, der bezüglich des vorderen Bolzens 16 auf gleichem Niveau bezüglich der Fahrzeughochrichtung liegt, jedoch nach hinten versetzt ist. Im Gegensatz zu dem vorderen Bolzen 16 ist der hintere Bolzen 18 zylindrisch ausgebildet, während die hintere Hülse 22 in Fahrzeuglängsrichtung bezüglich einer zylindrischen Form langgestreckt ist, d.h. die hintere Hülse 22 ist in der Art eines Langlochs ausgebildet. Ferner ist ihre Ausdehnung in axialer Richtung so gewählt, daß der Bolzen 18 ein Spiel in axialer Richtung, d.h. in Fahrzeugquerrichtung, hat.

Wie aus Fig. 1B ersichtlich ist, ist die hintere Hülse 22 so ausgebildet, daß der Bolzen 18 kein Spiel in der Fahrzeughochrichtung hat, jedoch in Fahrzeuglängsrichtung aufgrund der langlochartigen Form der hinteren Hülse 22 verschiebbar ist. Diese Ausgestaltung der hinteren Hülse 22 erlaubt es dem hinteren Bolzen 18, eine Verschiebung des vorderen Bolzens 16, und damit des Gleitelements 14, in Fahrzeugquerrichtung bezüglich der Dachspitze 10 sowie eine Verdrehung des vorderen Bolzens 16 und damit des Gleitelements 14 um die Fahrzeughochachse bezüglich der Dachspitze 10 mitzumachen, wobei jedoch der hintere Bolzen 18 eine an sich mögliche Schwenkbewegung des vorderen Bolzens 16 um die Fahrzeugquerachse durch die spielfreie Anlage an der Ober- bzw. Unterseite der hinteren Hülse 22 unterbindet.

Solange die beschriebenen Funktionen erhalten bleiben, sind die Bolzen 16 und 18 und die Hülsen 20 bzw. 22 nicht auf die in Fig. 1A bis 1C dargestellte Form beschränkt. So kann beispielsweise die Balligkeit des vorderen Bolzens 18 bis zur Kugelform gesteigert sein, wobei dann die vordere Hülse 20 ebenfalls kugelförmig ausgebildet wäre und als Ganzes in Fahrzeugquerrichtung bezüglich der Dachspitze 10 verschiebbar gelagert sein müßte. Aus fertigungstechnischen und montagetechnischen Gründen ist jedoch die in Fig. 1A bis 1C dargestellte zylindrische Ausgestaltung der vorderen Hülse 20 zu bevorzugen. Zur besseren Kraftverteilung in der Fahrzeughöhenrichtung kann der hintere Bolzen in ähnlicher Weise wie die hintere Hülse 22 in Fahrzeuglängsrichtung bezüglich der zylindrischen Form langgestreckt sein, wobei jedoch die Ober- und Unterseite abgeflacht sein müssen, um eine Verschiebbarkeit in Fahrzeuglängsrichtung innerhalb der hinteren Hülse 22 zu gewährleisten.

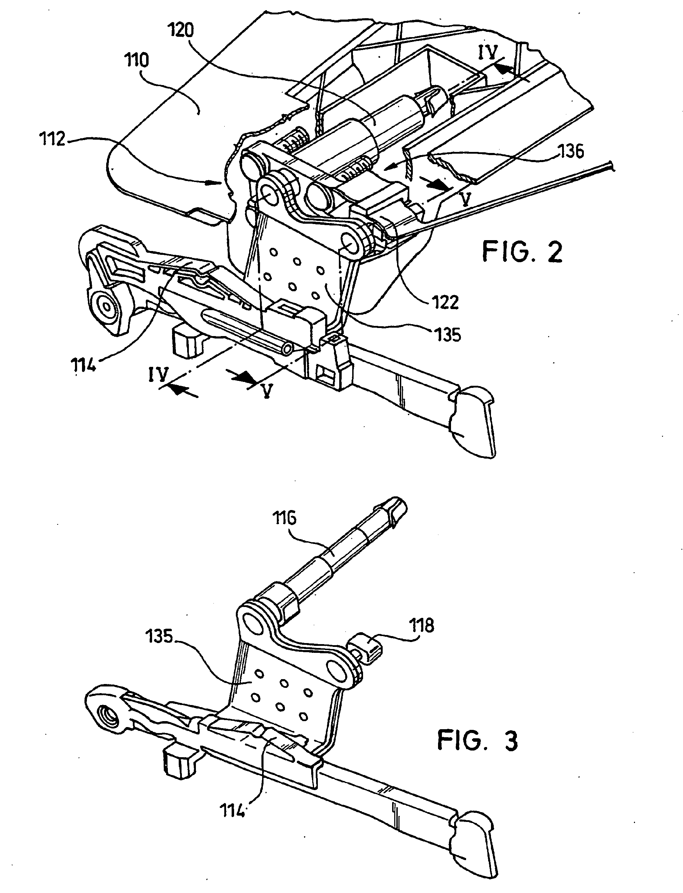

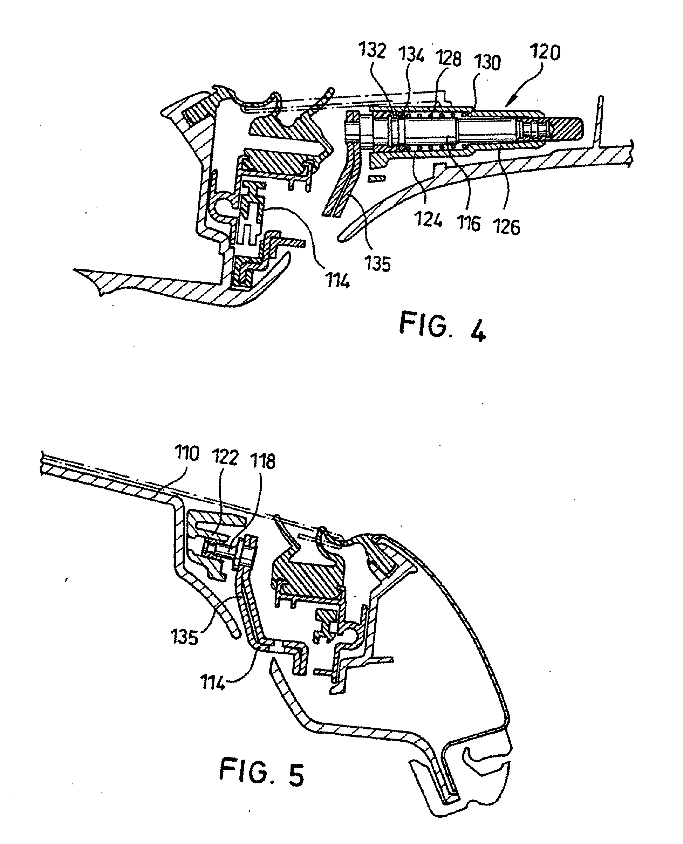

Die Figuren 2 bis 5 zeigen eine zweite Ausführungsform der Erfindung, welche sich von der vorstehend beschriebenen ersten Ausführungsform im Wesentlichen dadurch unterscheidet, daß bei der Lagervorrichtung 112 der vordere Bolzen 116 nicht ballig, sondern zylindrisch ausgebildet ist und dabei so bemessen ist, daß er in axialer Richtung in der Hülse 120 verschiebbar ist, jedoch nicht um die Fahrzeughochachse drehbar ist. In Fig. 4 ist zu erkennen, daß die vordere Lagerhülse 120 im Wesentlichen rotationssymmetrisch ausgebildet ist und einen zylindrischen äußeren Abschnitt 124 und einen zylindrischen inneren Abschnitt 126 aufweist, wobei der äußere Abschnitt 124 einen größeren Durchmesser als der innere Abschnitt 126 aufweist, um Raum für eine Druckfeder 128 zu bieten, welche sich an dem Übergangsbereich 130 zwischen dem äußeren Abschnitt 124 und dem inneren Abschnitt 126 abstützt, um einen Flanschbereich 132 des vorderen Bolzens 116, und damit den vorderen Bolzen 116 selbst, nach außen zu drücken. Mittels einer entsprechenden Lageranordnung auf der anderen Seite der Dachspitze 110 kann dadurch die Dachspitze 110 bezüglich der Fahrzeugquerrichtung zentriert werden, um Toleranzen in dieser Richtung auszugleichen, ohne daß ein entsprechendes Spiel des Gleitelements 120 bezüglich der dachfesten Führungsschiene erforderlich wäre. Die beiden einzigen Freiheitsgrade des vorderen Bolzens 116 in der Hülse 120 sind die erwähnte axiale Verschiebbarkeit und eine Drehbarkeit um seine Längsachse.

Um eine an sich mögliche Drehung des vorderen Bolzens 116 in der Hülse 120, d.h. um eine Drehung der Dachspitze 110 um die Fahrzeugquerachse, zu verhindem, ist ein in Fahrzeuglängsrichtung nach hinten versetzter hinterer Bolzen 118 vorgesehen, der parallel zu dem vorderen Bolzen 116 orientiert ist und in eine hintere Hülse 122 eingreift. Der hintere Bolzen 118 hat zumindest in Fahrzeughochrichtung kein Spiel in der Hülse 122, wobei im Gegensatz zu der oben beschriebenen ersten Ausführungsform aufgrund der fehlenden Balligkeit des vorderen Bolzens 116 auch kein Spiel des hinteren Bolzens 118 in Fahrzeuglängsrichtung erforderlich ist. Der hintere Bolzen 118 ist jedoch kürzer als die entsprechende Hülse 122 ausgebildet, so daß er in axialer Richtung, d.h. in Fahrzeugquerrichtung, in der Hülse 120 verschiebbar ist.

Der hintere Bolzen 118 ist in Dachlängsrichtung langgestreckt ausgebildet, wobei die Ober- und Unterseite eben sind und parallel zueinander verlaufen. Die Form der hinteren Hülse 122 ist entsprechend angepaßt.

Der vordere Bolzen 116 und der hintere Bolzen 118 werden von einer gemeinsamen Platte 134 getragen. Die beiden Lagerhülsen 120 und 122 sind als einstückiges Lagerelement 136 ausgebildet, welches als Ganzes in die Dachspitze 110 eingeschraubt ist.

### Bezugszeichenliste

| | |
|---|---|
| Dachspitze | **10,110** |
| Lagervorrichtung | **12, 112** |
| Gleitelement | **14,114** |
| vorderer Bolzen | **16, 116** |
| hinterer Bolzen | **18, 118** |
| vordere Hülse | **20, 120** |
| hintere Hülse | **22, 122** |
| äußerer Abschnitt von 116 | **124** |
| innerer Abschnitt von 116 | **126** |
| Druckfeder | **128** |
| Übergangsbereich von 116 | **130** |
| Flanschbereich von 116 | **132** |

## Patentansprüche

1. Fahrzeugdach mit einem entlang einer Dachöffnung verschiebbaren im Wesentlichen starren Element (10), das seitlich jeweils mittels einer Lagervorrichtung (12) mit einem in einer dachfesten Führung geführten Verstellmechanikteil (14) verbunden ist, wobei jede Lagervorrichtung so ausgebildet ist, daß das starre Element bezüglich des Verstellmechanikteils in einem gewissen Bereich in Fahrzeugquerrichtung verschiebbar ist,
**dadurch gekennzeichnet, dass** jede Lagervorrichtung (12) einen ersten Lagerbereich (16, 20) und einen zweiten Lagerbereich (18, 22) aufweist, wobei das starre Element (10) im ersten Lagerbereich (16, 20) bezüglich des Verstellmechanikteils (14) um die Fahrzeughochachse und um die Fahrzeuglängsachse verdrehbar gelagert ist und bezüglich des Verstellmechanikteils (14) in Fahrzeuglängsrichtung und in Fahrzeughochrichtung nicht verschiebbar gelagert ist und im ersten Lagerbereich (16, 20) vom zweiten Lagerbereich (18, 22) um die Fahrzeugquerachse nicht verdrehbar gehalten ist.

2. Fahrzeugdach gemäß Anspruch 1, **dadurch gekennzeichnet, daß** jede Lagervorrichtung (12) so ausgebildet ist, daß das starre Element (10) zwischen den Verstellmechanikteilen (14) in Fahrzeugquerrichtung über ein Federelement zentriert ist.

3. Fahrzeugdach gemäß Anspruch 1 oder 2, **dadurch gekennzeichnet, daß** jede Lagervorrichtung (12) eine sich in Fahrzeugquerrichtung erstreckende erste Lagerhülse (20) und einen darin eingreifenden ersten Lagerbolzen (16) aufweist, wobei der erste Bolzen in Fahrzeuglängsrichtung und in Fahrzeughochrichtung ballig ausgebildet ist und die erste Hülse so bemessen ist, daß der erste Bolzen in Fahrzeuglängsrichtung und in Fahrzeughochrichtung kein Spiel hat.

4. Fahrzeugdach gemäß Anspruch 3, **dadurch gekennzeichnet, daß** die erste Hülse (20) so bemessen ist, daß der erste Bolzen (16) in Fahrzeugquerrichtung Spiel hat.

5. Fahrzeugdach gemäß Anspruch 4, sofern auf Anspruch 2 rückbezogen, **dadurch gekennzeichnet, daß** eine Feder vorgesehen ist, welche den ersten Bolzen (16) in axialer Richtung der ersten Hülse (20) so vorspannt, daß das starre Element (10) bezüglich des Verstellmechanikteils (14) nach innen zur Dachmitte gedrückt wird.

6. Fahrzeugdach gemäß einem der Ansprüche 3 bis 5, **dadurch gekennzeichnet, daß** eine zweite Hülse (22) und ein darin eingreifender zweiter Bolzen (18) vorgesehen sind, welche im wesentlichen parallel zu der ersten Hülse (20) und dem ersten Bolzen (16) verlaufen.

7. Fahrzeugdach gemäß Anspruch 6, **dadurch gekennzeichnet, daß** die erste Hülse (20) und die zweite Hülse (22) in Fahrzeuglängsrichtung zueinander versetzt sind, jedoch in Fahrzeughochrichtung auf gleichem Niveau liegen, wobei die zweite Hülse so bemessen ist, daß der zweite Bolzen (18) in Fahrzeugquerrichtung und in Fahrzeuglängsrichtung, nicht jedoch in Fahrzeughochrichtung, Spiel hat.

8. Fahrzeugdach gemäß Anspruch 7, **dadurch gekennzeichnet, daß** der zweite Bolzen (18) in Fahrzeuglängsrichtung aus einer zylindrischen Form langgestreckt ist.

9. Fahrzeugdach gemäß einem der Ansprüche 3 bis 8, **dadurch gekennzeichnet, daß** die erste Hülse (20) rotationssymmetrisch ausgebildet ist

10. Fahrzeugdach mit einem entlang einer Dachöffnung verschiebbaren im Wesentlichen starren Element (110), das seitlich jeweils mittels einer Lagervorrichtung (112) mit einem in einer dachfesten Führung geführten Verstellmechanikteil (114) verbunden ist, wobei jede Lagervorrichtung so ausgebildet ist, daß das starre Element bezüglich des Verstellmechanikteils in einem gewissen Bereich in Fahrzeugquerrichtung verschiebbar ist, wobei jede Lagervorrichtung eine sich im Wesentlichen in Fahrzeugquerrichtung erstreckende erste Lagerhülse (120) und einen darin eingreifenden ersten Lagerbolzen (116) aufweist, wobei die Abmessungen so gewählt sind, daß der erste Bolzen in Fahrzeugquerrichtung, nicht jedoch in Fahrzeuglängsrichtung und in Fahrzeughochrichtung, Spiel hat, **dadurch gekennzeichnet, daß** jede Lagervorrichtung (112) so ausgebildet ist, daß sie das starre Element (110) bezüglich des Verstellmechanikteils (114) um die Fahrzeugquerachse drehfest lagert, wobei eine zweite Hülse (122) und ein darin eingreifender zweiter Bolzen (118) vorgesehen sind, welche axial versetzt in etwa parallel zu der ersten Hülse (120) und dem ersten Bolzen (116) verlaufen, und wobei die zweite Hülse so bemessen ist, daß der zweite Bolzen in Fahrzeugquerrichtung, nicht jedoch in Fahrzeughochrichtung, Spiel hat.

11. Fahrzeugdach gemäß Anspruch 10, **dadurch gekennzeichnet, daß** jede Lagervorrichtung (112) so ausgebildet ist, daß das starre Element (110) zwischen den Verstellmechanikteilen (114) in Fahrzeugquerrichtung über ein Federelement (128) zentriert ist.

12. Fahrzeugdach gemäß Anspruch 11, **dadurch gekennzeichnet, daß** eine Druckfeder (128) vorgesehen ist, welche den ersten Bolzen (116) in axialer Richtung der ersten Hülse (120) so vorspannt, daß das starre Element (110) bezüglich des Verstellmechanikteils (114) nach innen zur Dachmitte gedrückt wird.

13. Fahrzeugdach gemäß einem der Ansprüche 10 bis 12, **dadurch gekennzeichnet, daß** die zweite Hülse (122) und der zweite Bolzen (118) in Fahrzeuglängsrichtung bezüglich der ersten Hülse (120) und des ersten Bolzens (116) versetzt sind, jedoch in Fahrzeughochrichtung auf gleichem Niveau liegen.

14. Fahrzeugdach gemäß Anspruch 10 bis 13, **dadurch gekennzeichnet, daß** der zweite Bolzen (122) in Fahrzeuglängsrichtung aus einer zylindrischen Form langgestreckt ist.

15. Fahrzeugdach gemäß Anspruch 10 bis 14, **dadurch gekennzeichnet, daß** die erste Hülse (120) und der erste Bolzen (116) rotationssymmetrisch ausgebildet sind.

16. Fahrzeugdach gemäß einem der Ansprüche 3 bis 9 bzw. 11 bis 15, **dadurch gekennzeichnet, daß** die Bolzen (16 und 18 bzw. 116 und 118) an dem Verstellmechanikteil (14 bzw. 114) und die Hülsen (20 und 22 bzw. 120 und 122) am starren Element (10 bzw. 110) ausgebildet sind.

17. Fahrzeugdach gemäß Anspruch 16, sofern auf Anspruch 6 bzw. 10 rückbezogen, **dadurch gekennzeichnet, daß** die erste (20 bzw. 120) und die zweite Hülse (22 bzw. 122) einstückig ausgebildet und in das starre Element (10 bzw. 110) eingeschraubt sind.

18. Fahrzeugdach gemäß Anspruch 17, **dadurch gekennzeichnet, daß** der erste (16 bzw. 116) und der zweite Bolzen (18 bzw. 118) von einer gemeinsamen Platte (134) getragen werden.

19. Fahrzeugdach gemäß einem der vorhergehenden Ansprüche, **dadurch gekennzeichnet, daß** es sich bei dem starren Element (10 bzw. 110) um das Spannelement eines Faltdaches handelt.

20. Fahrzeugdach gemäß einem der vorhergehenden Ansprüche, **dadurch gekennzeichnet, daß** es sich bei den Verstellmechanikteilen um in dachfesten Schienen in Fahrzeuglängsrichtung geführte Gleitelemente (14 bzw. 114) handelt.

## Claims

1. Vehicle roof provided with a substantially rigid element (10) which is slideable along a roof opening and is connected laterally in each case by means of a bearing device (12) to a displacement mechanism part (14) guided in a guide mounted on the roof, wherein each bearing device is designed in such a manner that the rigid element is slideable with respect to the displacement mechanism part within a certain region in the transverse direction of the vehicle, **characterized in that** each bearing device (12) has a first bearing region (16, 20) and a second bearing region (18, 22), the rigid element (10) being mounted in the first bearing region (16, 20) in a manner such that it is rotatable about the vertical axis of the vehicle and about the longitudinal axis of the vehicle with respect to the displacement mechanism part (14) and is mounted in a manner such that it is not slideable in the longitudinal direction of the vehicle and in the vertical direction of the vehicle with respect to the displacement mechanism part (14), and is held in the first bearing region (16, 20) by the second bearing region (18, 22) in a manner such that it is not rotatable about the transverse axis of the vehicle.

2. Vehicle roof according to Claim 1, **characterized in that** each bearing device (12) is designed in such a manner that the rigid element (10) is centred between the displacement mechanism parts (14) in the transverse direction of the vehicle via a spring element.

3. Vehicle roof according to Claim 1 or 2, **characterized in that** each bearing device (12) has a first bearing sleeve (20) extending in the transverse direction of the vehicle and a first bearing bolt (16) engaging in said bearing sleeve, the first bolt being of spherical design in the longitudinal direction of the vehicle and in the vertical direction of the vehicle, and the first sleeve being dimensioned in such a manner that the first bolt does not have any play in the longitudinal direction of the vehicle and in the vertical direction of the vehicle.

4. Vehicle roof according to Claim 3, **characterized in that** the first sleeve (20) is dimensioned in such a manner that the first bolt (16) has play in the transverse direction of the vehicle.

5. Vehicle roof according to Claim 4, in so far as it refers back to Claim 2, **characterized in that** a spring is provided which pretensions the first bolt (16) in the axial direction of the first sleeve (20) in such a manner that the rigid element (10) is pressed inwards with respect to the displacement mechanism part (14) towards the centre of the roof.

6. Vehicle roof according to one of Claims 3 to 5, **characterized in that** a second sleeve (22) and a second bolt (18) engaging therein are provided, said sleeve and bolt running substantially parallel to the first sleeve (20) and the first bolt (16).

7. Vehicle roof according to Claim 6, **characterized in that** the first sleeve (20) and the second sleeve (22) are offset with respect to each other in the longitudinal direction of the vehicle, but lie on the same level in the vertical direction of the vehicle, with the second sleeve being dimensioned in such a manner that the second bolt (18) has play in the transverse direction of the vehicle and the longitudinal direction of the vehicle, but not in the vertical direction of the vehicle.

8. Vehicle roof according to Claim 7, **characterized in that** the second bolt (18) is elongated from a cylindrical shape in the longitudinal direction of the vehicle.

9. Vehicle roof according to one of Claims 3 to 8, **characterized in that** the first sleeve (20) is of rotationally symmetrical design.

10. Vehicle roof provided with a substantially rigid element (110) which is slideable along a roof opening and is connected laterally in each case by means of a bearing device (112) to a displacement mechanism part (114) guided in a guide mounted on the roof, wherein each bearing device is designed in such a manner that the rigid element is slideable with respect to the displacement mechanism part within a certain region in the transverse direction of the vehicle, wherein each bearing device has a first bearing sleeve (120) extending substantially in the transverse direction of the vehicle, and a first bearing bolt (116) engaging in said bearing sleeve, wherein the dimensions are selected in such a manner that the first bolt has play in the transverse direction of the vehicle, but not in the longitudinal direction of the vehicle and in the vertical direction of the vehicle, **characterized in that** each bearing device (112) is designed in such a manner that it mounts the rigid element (110) with respect to the displacement mechanism part (114) in a manner such that it is rotationally fixed about the transverse axis of the vehicle, with a second sleeve (122) and a second bolt (118) engaging therein being provided, said sleeve and bolt running in an axially offset manner approximately parallel to the first sleeve (120) and the first bolt (116), and with the second sleeve being dimensioned in such a manner that the second bolt has play in the transverse direction of the vehicle, but not in the vertical direction of the vehicle.

11. Vehicle roof according to Claim 10, **characterized in that** each bearing device (112) is designed in such a manner that the rigid element (110) is centred between the displacement mechanism parts (114) in the transverse direction of the vehicle via a spring element (128).

12. Vehicle roof according to Claim 11, **characterized in that** a compression spring (128) is provided which pretensions the first bolt (116) in the axial direction of the first sleeve (120) in such a manner that the rigid element (110) is pressed inwards with respect to the displacement mechanism part (114) towards the centre of the roof.

13. Vehicle roof according to one of Claims 10 to 12, **characterized in that** the second sleeve (122) and the second bolt (118) are offset with respect to the first sleeve (120) and the first bolt (116) in the longitudinal direction of the vehicle, but lie on the same level in the vertical direction of the vehicle.

14. Vehicle roof according to Claims 10 to 13, **characterized in that** the second bolt (122) is elongated from a cylindrical shape in the longitudinal direction of the vehicle.

15. Vehicle roof according to Claims 10 to 14, **characterized in that** the first sleeve (120) and the first bolt (116) are of rotationally symmetrical design.

16. Vehicle roof according to one of Claims 3 to 9 and 11 to 15, **characterized in that** the bolts (16 and 18 and 116 and 118) are formed on the displacement mechanism part (14 and 114) and the sleeves (20 and 22 and 120 and 122) are formed on the rigid element (10 and 110).

17. Vehicle roof according to Claim 16, in so far as it refers back to Claims 6 and 10, **characterized in that** the first sleeve (20 and 120) and the second sleeve (22 and 122) are of single-piece design and are screwed into the rigid element (10 and 110).

18. Vehicle roof according to Claim 17, **characterized in that** the first bolt (16 and 116) and the second bolt (18 and 118) are supported by a common plate (134).

19. Vehicle roof according to one of the preceding claims, **characterized in that** the rigid element (10 and 110) is the tensioning element of a folding roof.

20. Vehicle roof according to one of the preceding claims, **characterized in that** the displacement mechanism parts are sliding elements (14 and 114) which are guided in the longitudinal direction of the vehicle in rails mounted on the roof.

## Revendications

1. Toit de véhicule doté d'un élément rigide pour l'essentiel coulissant le long d'une ouverture de toit (10), ledit toit étant respectivement relié latéralement à une pièce mécanique mobile (14) guidée dans une glissière fixée au toit à l'aide d'un dispositif de palier (12), chaque dispositif de palier étant réalisé de telle sorte que l'élément rigide est coulissant par rapport à la pièce mécanique mobile dans une zone donnée dans la direction transversale du véhicule ;
**caractérisé en ce que** chaque dispositif de palier (12) comporte une première zone de palier (16, 20) et une deuxième zone de palier (18, 22), l'élément rigide (10) étant disposé de façon pivotante dans la première zone de palier (16, 20) par rapport à la pièce mécanique mobile (14) de façon à tourner autour de l'axe vertical du véhicule et autour de l'axe longitudinal du véhicule et étant disposé de façon non coulissante par rapport à la pièce mécanique mobile (14) dans la direction longitudinale du véhicule et dans la direction verticale du véhicule et étant maintenu de façon pivotante dans la première zone de palier (16, 20) depuis la deuxième zone de palier (18, 22) de façon à tourner autour de l'axe transversal du véhicule.

2. Toit de véhicule selon la revendication 1, **caractérisé en ce que** chaque dispositif de palier (12) est réalisé de telle sorte que l'élément rigide (10) est centré entre les pièces mécaniques mobiles (14) dans la direction transversale du véhicule par l'intermédiaire d'un élément à ressort.

3. Toit de véhicule selon la revendication 1 ou 2, **caractérisé en ce que** chaque dispositif de palier (12) comporte un premier manchon de palier (20) s'étendant dans la direction transversale du véhicule et un premier boulon de palier (16) entrant ensuite en prise avec celui-ci, le premier boulon étant réalisé de façon sphérique dans la direction longitudinale du véhicule et dans la direction verticale du véhicule et le premier manchon étant dimensionné de façon à ce que le premier boulon ne présente aucun jeu dans la direction longitudinale du véhicule et dans la direction verticale du véhicule.

4. Toit de véhicule selon la revendication 3,
**caractérisé en ce que** le premier manchon (20) est dimensionné de telle sorte que le premier boulon (16) présente du jeu dans la direction transversale du véhicule.

5. Toit de véhicule selon la revendication 4, dans la mesure où elle se rapporte à la revendication 2, **caractérisé en ce qu'**un ressort est prévu qui précontraint le premier boulon (16) dans la direction axiale du premier manchon (20) de telle façon que l'élément rigide (10) est comprimé vers l'intérieur en direction du milieu du toit par rapport à la pièce mécanique mobile (14).

6. Toit de véhicule selon l'une quelconque des revendications 3 à 5, **caractérisé en ce qu'**un deuxième manchon (22) et un deuxième boulon (18) entrant en prise avec celui-ci sont prévus, ces éléments s'étendant pour l'essentiel parallèlement au premier manchon (20) et au premier boulon (16).

7. Toit de véhicule selon la revendication 6,
**caractérisé en ce que** le premier manchon (20) et le deuxième manchon (22) sont décalés l'un par rapport à l'autre dans la direction longitudinale du véhicule mais reposent sur le même niveau dans la direction verticale du véhicule, le deuxième manchon étant dimensionné de telle sorte que le deuxième boulon (18) présente du jeu dans la direction transversale du véhicule et dans la direction longitudinale du véhicule mais pas dans la direction verticale du véhicule.

8. Toit de véhicule selon la revendication 7,
**caractérisé en ce que** le deuxième boulon (18) s'étend en longueur dans la direction longitudinale du véhicule et prend une forme cylindrique.

9. Toit de véhicule selon l'une quelconque des revendications 3 à 8, **caractérisé en ce que** le premier manchon (20) est réalisé de façon symétrique en rotation.

10. Toit de véhicule avec un élément rigide (110) pour l'essentiel coulissant le long d'une ouverture de toit, ledit toit étant respectivement relié latéralement à une pièce mécanique mobile (114) guidée dans une glissière fixée au toit au moyen d'un dispositif de palier (112), chaque dispositif de palier étant réalisé de telle sorte que l'élément rigide est coulissant dans une zone définie dans la direction transversale du véhicule par rapport à la pièce mécanique mobile, chaque dispositif de palier comportant un premier manchon de palier (120) s'étendant pour l'essentiel dans la direction transversale du véhicule et un premier boulon de palier (116) entrant en prise dans celui-ci, les dimensions étant choisies de telle sorte que le premier boulon présente du jeu dans la direction transversale du véhicule mais pas dans la direction longitudinale du véhicule et dans la direction verticale du véhicule,
**caractérisé en ce que** chaque dispositif de palier (112) est réalisé de telle sorte qu'il loge fixement sans rotation l'élément rigide (110) par rapport à la pièce mécanique mobile (114) autour de l'axe transversal du véhicule, un deuxième manchon (122) et un deuxième boulon (118) entrant en prise à l'intérieur de celui-ci étant prévus, ces éléments s'étendant de façon décalée dans le plan axial approximativement parallèlement au premier manchon (120) et au premier boulon (116) et le deuxième manchon étant dimensionné de telle sorte que le deuxième boulon présente du jeu dans la direction transversale du véhicule mais pas dans la direction verticale du véhicule.

11. Toit de véhicule selon la revendication 10, **caractérisé en ce que** chaque dispositif de palier (112) est réalisé de telle sorte que l'élément rigide (110) est centré entre les pièces mécaniques mobiles (114) dans la direction transversale du véhicule au moyen d'un élément à ressort (128).

12. Toit de véhicule selon la revendication 11, **caractérisé en ce qu'**un ressort de compression (128) est prévu qui précontraint de telle sorte le premier boulon (116) dans la direction axiale du premier manchon (120) que l'élément rigide (110) est comprimé vers l'intérieur en direction du milieu du toit par rapport à la pièce mécanique mobile (114).

13. Toit de véhicule selon l'une quelconque des revendications 10 à 12, **caractérisé en ce que** le deuxième manchon (122) et le deuxième boulon (118) sont décalés dans la direction longitudinale du véhicule par rapport au premier manchon (120) et au premier boulon (116) mais se situent au même niveau dans la direction verticale du véhicule.

14. Toit de véhicule selon la revendication 10 à 13, **caractérisé en ce que** le deuxième boulon (122) s'étend dans le sens de la longueur dans la direction longitudinale du véhicule et prend une forme cylindrique.

15. Toit de véhicule selon la revendication 10 à 14, **caractérisé en ce que** le premier manchon (120) et le premier boulon (116) sont réalisés de façon symétrique en rotation.

16. Toit de véhicule selon l'une quelconque des revendications 3 à 9 et/ou 11 à 15, **caractérisé en ce que** les boulons (16 et 18 et/ou 116 et 118) sont réalisés au niveau de la pièce mécanique mobile (14 et/ou 114) et que les manchons (20 et 22 et/ou 120 et 122) sont réalisés au niveau de l'élément rigide (10 et/ou 110).

17. Toit de véhicule selon la revendication 16, dans la mesure où elle se rapporte à la revendication 6 et/ou 10, **caractérisé en ce que** le premier (20 et/ou 120) et le deuxième manchon (22 et/ou 122) sont réalisés d'un seul tenant et vissés dans l'élément rigide (10 et/ou 110).

18. Toit de véhicule selon la revendication 17,
**caractérisé en ce que** le premier (16 et/ou 116) et le deuxième boulon (18 et/ou 118) sont supportés par une plaque (134) commune.

19. Toit de véhicule selon l'une quelconque des revendications précédentes, **caractérisé en ce que** l'élément rigide (10 et/ou 110) est l'élément tendeur d'un toit pliant.

20. Toit de véhicule selon l'une quelconque des revendications précédentes, **caractérisé en ce que** les pièces mécaniques mobiles sont des éléments coulissants (14 et/ou 114) guidés dans des rails fixés au toit dans la direction longitudinale du véhicule.
